# FASCICULE DE BREVET EUROPEEN

(11) **EP 1 124 314 B1**
(45) Date de publication et mention de la délivrance du brevet: **07.01.2009**
(21) Numéro de dépôt: 01200428.9
(22) Date de dépôt: 06.02.2001
(51) Int. Cl.: H02M 3/07

(54) **Dispositif électronique de pompe de charge**
Ladungspumpenvorrichtung
Charge pump appartus

(30) Priorité: 09.02.2000 EP 00102692
(43) Date de publication de la demande: 16.08.2001
(73) Titulaire: EM Microelectronic-Marin SA, 2074 Marin (CH)
(72) Inventeur: Rey, Olivier, 2523 Lignières (CH); Bonjour, Christian, 2523 Lignières (CH)
(74) Mandataire: Surmely, Gérard

(56) Documents cités:
- WO-A-99/03192
- US-A- 4 734 599
- US-A- 5 798 915
- US-A- 5 973 979

## Description

La présente invention concerne un dispositif de pompe de charge comprenant en échelle une pluralité d'étages pour transférer une charge de potentiel d'un étage au suivant en réponse à des signaux d'horloge. Chaque étage comprend, disposé entre une entrée et une sortie de celui-ci, un circuit de commutation et une capacité de stockage. Le circuit de commutation est formé d'un premier transistor monté avec un second transistor, les drains des premier et second transistors étant reliés à l'entrée de l'étage, la source du premier transistor étant reliée à la grille du second transistor et la source du second transistor étant reliée à la sortie de l'étage et à la grille du premier transistor. La grille du second transistor est commandée par un des signaux d'horloge par exemple via une capacité.

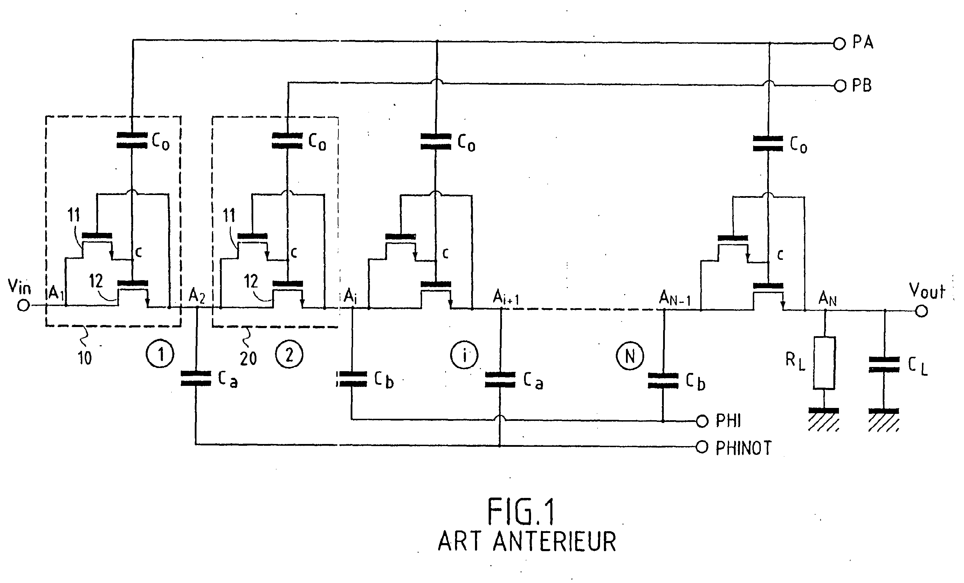

Une pompe de charge du type Dickson est couramment utilisée dans des dispositifs tels que des EEPROM, par exemple, qui requièrent d'obtenir une forte élévation de tension à partir d'une tension disponible relativement faible. Une pompe de charge de type Dickson est essentiellement constituée d'une pluralité d'étages disposés en échelle. Chaque étage de la pompe comprend un dispositif actif qui conduit le courant dans un seul sens et une capacité de stockage. La figure 1 montre un exemple d'une autre réalisation d'une pompe de charge. Des étages 1 à N sont connectés en échelle les uns aux autres par un dispositif actif 10, 20 de commutation formé de deux transistors 11, 12.

Le choix d'utiliser un circuit de deux transistors plutôt qu'un simple transistor connecté en diode (le drain est connecté avec la grille) permet d'éviter des chutes de tension dans la pompe de charge dues aux effets de tensions de seuil inhérentes aux transistors connectés en diode. En effet, pour un transistor connecté en diode, la tension de seuil peut être de 2V ou plus, limitant ainsi une tension Vin minimale exploitable à 2V ou plus.

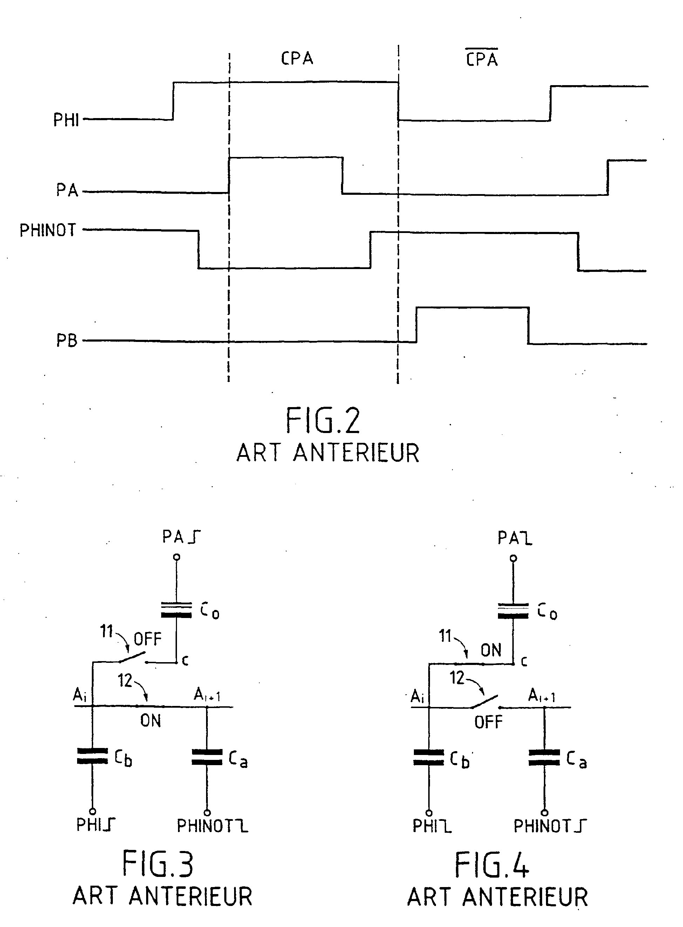

Le circuit de commutation 10, 20 est contrôlé par des signaux d'horloge PA, PB via une capacité Co qui réduit la chute de tension dans le circuit de commutation. La pompe de charge présente alors un facteur de multiplication presque idéal, ce qui permet d'obtenir une tension de sortie Vout plus élevée. Cette pompe de charge est contrôlée classiquement par une horloge quadriphase à signaux PHI, PA, PHINOT, PB non entrelacés comme illustrée sur la figure 2. La pompe de charge est mise en fonctionnement par application des quatre signaux d'horloge PHI, PA, PHINOT, PB à la pluralité d'étages 1 à N. Lorsque la tension surélevée Vout n'est plus requise, la pompe est mise hors fonctionnement par arrêt de l'application des signaux d'horloge ou par un dispositif qui interrompt la délivrance du signal de sortie surélevé Vout.

Le mode de fonctionnement de la pompe de charge est expliqué en référence aux figures 3 et 4. On suppose que tous les noeuds internes du dispositif de commutation 10, 20 sont à un potentiel nul avant le démarrage de la pompe.

La figure 3 montre la configuration de l'étage lors d'une séquence active CPA du signal PHI d'horloge. Le transistor 11 est dans un état bloqué (OFF) qui empêche le courant de circuler et le transistor 12 est dans un état passant (ON) autorisant le passage du courant. Dans cette configuration, le potentiel VAᵢ au noeud Aᵢ est équivalent au potentiel VAᵢ₊₁ au noeud Aᵢ₊₁. Cette première séquence correspond à une phase d'élévation des potentiels VAᵢ et VAᵢ₊₁ selon la charge capacitive de la capacité Cb qui circule à travers le transistor 12 dans la capacité Ca.

La figure 4 montre la configuration d'un étage de la pompe lors d'une séquence inactive *C̅P̅A̅* du signal PHI d'horloge. Le transistor 11 se trouve dans l'état passant, alors que le transistor 12 se trouve dans l'état bloqué empêchant le courant de circuler du noeud Aᵢ au noeud Aᵢ₊₁. Dans cette configuration, le potentiel VAᵢ au noeud Aᵢ est équivalent au potentiel Vc au noeud c point de jonction de la source du transistor 11 avec la grille du transistor 12.

Ces deux séquences sont réalisées alternativement sur les étages pairs et impairs pour fournir en sortie de chaîne une tension surélevée Vout qui correspond à une valeur d'entrée Vin plus un certain nombre de fois une valeur approchant la tension crête des signaux d'horloge PHI et PHINOT.

Un tel fonctionnement régulier de la pompe de charge ne peut être mis en oeuvre qu'à la condition où initialement les noeuds internes du dispositif de commutation 10 sont à un potentiel nul. Cependant, en pratique, certains noeuds internes dans la pluralité d'étages capacitifs N conservent des potentiels de tension ayant des valeurs comprises entre 0 volt et Vout après une séquence de charge de la pompe. Ceci entraîne des problèmes lors du démarrage suivant de la pompe qui conduisent à une dégradation de l'élévation du signal Vin dans la plupart des cas et à aucune élévation du signal Vin dans les cas les plus mauvais. En effet, dans les cas les plus mauvais, le noeud c dans un ou plusieurs étages mémorise une tension sur la capacité Co supérieure au potentiel VAᵢ₊₁ du noeud Aᵢ₊₁, ce qui polarise le transistor 12 dans l'état passant. Ainsi, le noeud Aᵢ₊₁ se trouve à un potentiel VAᵢ₊₁ proche du potentiel VAᵢ du noeud Aᵢ. Etant donné que le potentiel VAᵢ₊₁ joue le rôle de tension de commande pour le transistor 11, ce dernier reste dans l'état bloqué empêchant alors toute décharge du potentiel Vc du noeud c dans le circuit. En conséquence, dans ce cas, le démarrage suivant de la pompe ne pourra pas être effectué normalement puisqu'un ou plusieurs étages restent en permanence bloqués dans la configuration représentée en figure 3, ce qui résulte en un transfert de charge alternatif entre les capacités Ca et Cb, empêchant l'effet de pompe de charge de se produire.

La figure 5 illustre deux cycles de charge consécutifs D1 et D2. Le premier cycle de charge D1 montre un démarrage de la pompe dans les conditions idéales, c'est-à-dire sans aucun noeud interne chargé alors que le deuxième cycle consécutif D2 montre la dégradation de charge dans la pompe lorsque celle-ci a mémorisé des potentiels dans ses noeuds internes lors du cycle de charge précédent D1.

Ce type de pompe de charge est également connu du document US 4,734,599. Cette demande de brevet décrit une pompe de charge utilisant des transistors PMOS, similaire à celle représentée à la figure 1. L'effet de la pompe de charge en est inversé. La tension de sortie Vout est une haute tension négative, ce qui ne change pas le principe général de fonctionnement de la pompe.

Un transistor PMOS est dans un état passant lorsque le potentiel de sa grille est inférieur au potentiel de sa source d'au moins une tension de seuil (Vt) du transistor. Cette tension de seuil dépend notamment de la tension appliquée à la source du transistor. Ainsi Vt peut varier environ entre 0,7 V et 3 V, respectivement, pour une basse tension appliquée à la source du transistor, de l'ordre du volt, et pour une haute tension appliquée à la source du transistor, de l'ordre d'une dizaine de volts.

Comme dans l'art antérieur susmentionné, des potentiels de tension sont conservés dans certains noeuds du circuit. Toutefois, grâce à la forte amplitude des signaux d'horloge utilisés, notamment de 5 V comme suggérée dans ce document, le potentiel de la grille du transistor 11 est toujours rendu inférieur au potentiel de sa source lors de l'impulsion du signal d'horloge associé, quelle que soit la tension de seuil effective de ce transistor dans la plage susmentionnée. Le transistor 11 étant dans un état passant, le potentiel Vc est amené au potentiel VAᵢ, ce qui permet d'avoir le transistor 12 dans un état bloqué.

Toutefois, la solution apportée dans ce document ne résout pas le problème de démarrage pour des signaux d'horloge de moindre amplitude, notamment inférieure à 3 volts. En effet, l'un des soucis permanents de l'homme du métier est de consommer le minimum d'énergie dans de nombreux dispositifs à faible consommation. C'est pourquoi, il est utilisé, de préférence des signaux d'horloge ayant une tension de crête inférieure à 3 volts, par exemple entre 1,5 et 2 V. Dans ces conditions d'économie d'énergie, le dispositif de pompe de charge du document US 4,734,599 présente les mêmes inconvénients que l'art antérieur précité.

La présente invention vise à remédier aux inconvénients précités de l'art antérieur et, en particulier, à réaliser un dispositif de pompe de charge qui rétablit, entre chaque activation de la pompe, les conditions de potentiel requises pour un fonctionnement optimal du circuit de commutation au démarrage et ce également avec une consommation d'énergie réduite.

Ces buts sont atteints grâce à un dispositif de pompe de charge tel que défini dans le domaine de l'invention ci-avant et caractérisé en ce qu'au moins un des étages comprend, en outre, des moyens de démarrage, à un noeud c de jonction de la source du premier transistor avec la grille du second transistor ayant un potentiel Vc, pour maintenir le second transistor dans un état bloqué entre deux cycles de charge du dispositif de pompe de charge.

Ainsi, les conditions idéales de démarrage de la pompe de charge sont réalisées et les incidents de charge de l'art antérieur sont donc évités.

De préférence, le dispositif de pompe de charge selon l'invention comprend une pluralité d'étages, chacun étant muni des moyens de démarrage.

Plus particulièrement, lorsque le dispositif de pompe de charge selon l'invention fonctionne en courant direct, les moyens de démarrage comportent des moyens pour maintenir le potentiel Vc du noeud c à une valeur inférieure ou égale à celle d'un potentiel à la sortie de l'étage.

En conséquence, le noeud de jonction de la source du premier transistor avec la grille du second transistor est maintenu à une valeur de potentiel moins élevée que celle de la source de ce second transistor, ce qui maintient ce dernier dans un état bloqué entre deux activations de la pompe.

Ainsi, si le dispositif de pompe de charge selon l'invention fonctionne en courant inverse, les moyens de démarrage comportent des moyens pour maintenir le potentiel Vc du noeud c à une valeur supérieure ou égale à celle d'un potentiel à la sortie de l'étage. Le noeud de jonction de la source du premier transistor avec la grille du second transistor est maintenu à une valeur de potentiel plus élevée que celle de sa source, ce qui maintient le second transistor dans un état bloqué entre deux activations de la pompe.

Dans un premier mode de réalisation de l'invention fonctionnant en courant direct, les moyens de démarrage comprennent un commutateur disposé entre le noeud de jonction et une borne de mise à la terre. Avantageusement, le noeud de jonction est alors déchargé de son potentiel.

Selon un deuxième mode de réalisation, les moyens de démarrage comprennent un commutateur disposé entre le noeud de jonction et la sortie de l'étage. La condition minimum pour maintenir le second transistor dans un état bloqué est alors réalisée.

Dans un mode de réalisation fonctionnant en courant inverse, les moyens de démarrage comprennent un commutateur disposé entre le noeud de jonction et une source de potentiel positif. Le circuit commutateur ainsi que les moyens de démarrage sont alors adaptés à la pompe de charge selon l'invention pour un fonctionnement en courant inverse.

Le dispositif de pompe de charge selon l'invention peut indifféremment comprendre des premier et second transistors du type transistor bipolaire ou à jonction, à effet de champ à jonction (FET) ou à effet de champ à grille isolée (MOS).

Selon une variante de l'invention, les moyens de démarrage comprennent une résistance disposée entre le commutateur et le potentiel de terre. Un lien résistif entre le noeud de jonction et le potentiel de terre est alors établi.

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1, déjà décrite, est un schéma électrique d'un dispositif de pompe de charge selon l'art antérieur,
- la figure 2 est un diagramme représentant les signaux d'horloge de commande de la pompe de charge de la figure 1,
- la figure 3 est un schéma électrique d'une première configuration de fonctionnement d'un étage de la pompe de charge de la figure 1,
- la figure 4 est un schéma électrique d'une seconde configuration de fonctionnement d'un étage de la pompe de charge de la figure 1,
- la figure 5 est un diagramme de deux charges consécutives de la pompe de charge de la figure 1 selon l'art antérieur,
- la figure 6 est un schéma électrique d'un dispositif de pompe de charge, conformément à un premier mode de réalisation de l'invention,
- la figure 7 est un diagramme de deux charges consécutives de la pompe de charge selon l'invention,
- la figure 8 est un schéma électrique d'un étage d'un dispositif de pompe de charge conformément à un deuxième mode de réalisation de l'invention, et
- la figure 9 est un schéma électrique d'un étage d'un dispositif de pompe de charge conformément à un troisième mode de réalisation de l'invention.

Les figures 1 à 5 ont déjà été décrites en relation avec l'art antérieur.

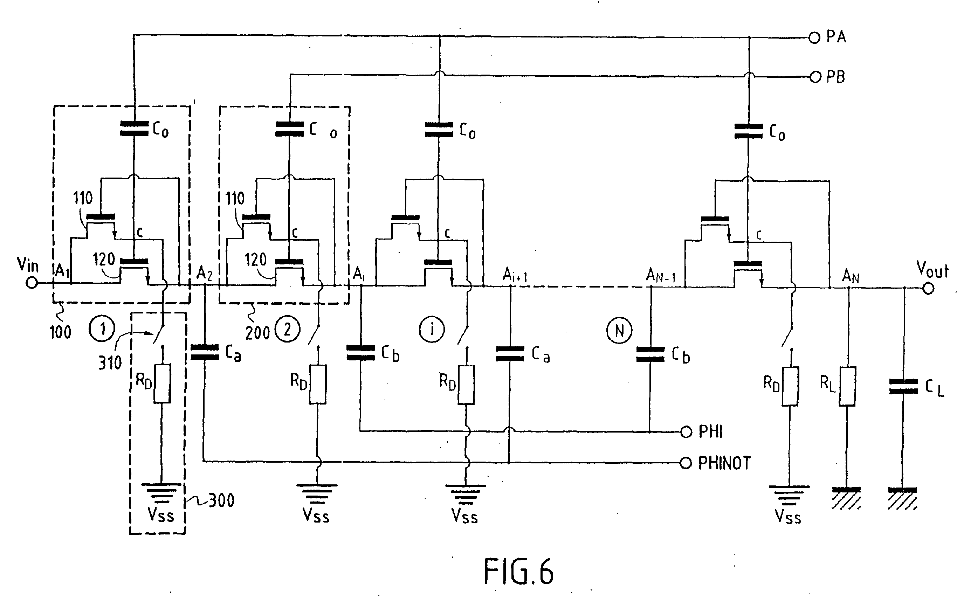

La figure 6 représente une pompe de charge selon l'invention comprenant des éléments de la pompe de charge décrite en relation avec l'art antérieur et des moyens complémentaires de démarrage 300 selon un premier mode de réalisation. La pompe de charge comprend notamment une pluralité d'étages 1 à N disposés en échelle, chacun comprenant, de façon connue, un circuit de commutation 100, 200 et une capacité Ca, Cb, le circuit de commutation étant formé par la connexion d'un premier transistor 110 et d'un second transistor 120. La charge de la pompe s'effectue classiquement en réponse à des signaux PHI, PA, PHINOT, PB non entrelacés d'une horloge quadriphase. Avantageusement, ces signaux auront, dans un souci d'économie d'énergie, une tension de crête inférieure à 3 volts ou sensiblement égale à cette valeur.

Les moyens 300 de démarrage comprennent un commutateur 310 connecté d'un côté à un noeud c de jonction de la source du premier transistor 110 avec la grille du second transistor 120 et d'un autre côté à une borne de mise à la terre Vₛₛ. Ainsi, la pompe de charge dispose d'un moyen de sécurisation du démarrage avant chaque phase d'activation de celle-ci. En effet, comme le noeud c est déchargé de son potentiel dans la borne de mise à la terre Vₛₛ par fermeture du commutateur 310, le second transistor 120 peut être alors placé dans un état bloqué de façon certaine avant tout démarrage de la pompe car alors le potentiel Vc au noeud c est inférieur ou égal à un potentiel VAᵢ₊₁ au noeud Aᵢ₊₁ qui correspond au potentiel de la source du second transistor 120. Avec de tels moyens de sécurisation du démarrage de la pompe, on garantit à chaque fois une charge optimale de la pompe. Ces moyens de démarrage 300 intervenant entre deux activations de la pompe, le commutateur 310 peut alors être commandé par un dispositif qui permet de déterminer si une tension surélevée Vout est requise à la sortie de la pompe ou non. Le commutateur est activé (ON) de préférence entre chaque cycle d'activation du dispositif de pompe de charge. Il est désactivé (OFF) chaque fois que ce dispositif est activé pour délivrer en sortie une tension surélevée. De préférence, tous les commutateurs sont activés simultanément à l'aide d'un signal de commande fourni par un circuit électronique agencé pour commander ces commutateurs. De plus, une résistance R_{D} peut être disposée entre le commutateur 310 et la prise de potentiel de terre Vₛₛ pour établir un lien résistif entre le potentiel Vc au noeud c et la borne de terre Vₛₛ.

On notera que dans un autre mode de réalisation, il est prévu une résistance de valeur élevée sans interrupteur pour former les moyens de démarrage.

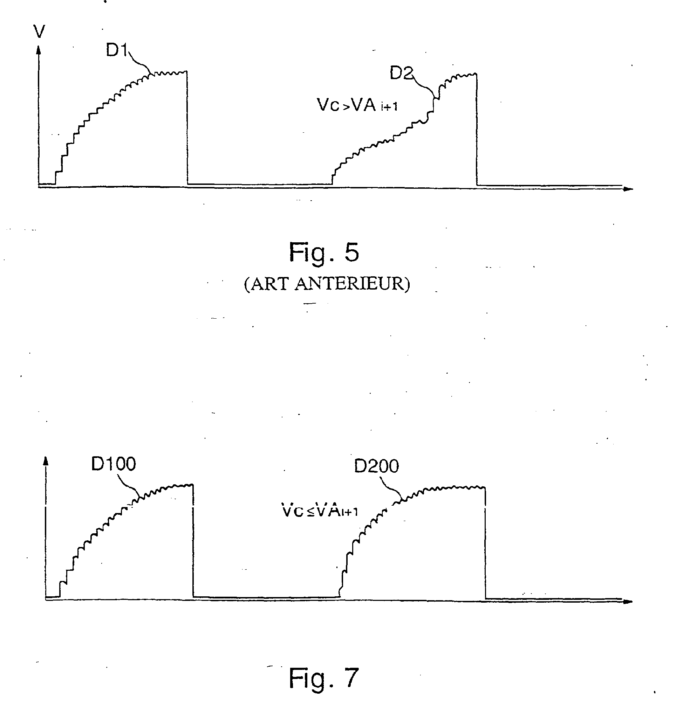

La figure 7 montre deux cycles de charge successifs de la pompe D100 et D200 où les moyens de démarrage 300 ont été mis en oeuvre comme expliqué précédemment entre les deux activations. On constate une parfaite symétrie de l'activation D200 avec l'activation D100 à la différence de l'activation D2 de la figure 5 obtenue avec une pompe de charge utilisée sans les moyens de démarrage de l'invention.

Une pompe de charge selon l'invention peut déjà être sécurisée au démarrage avec un seul étage ou un sous-ensemble d'étages parmi les étages 1 à N équipé(s) des moyens de démarrage précités. De préférence, tous les étages comprennent ces moyens de démarrage.

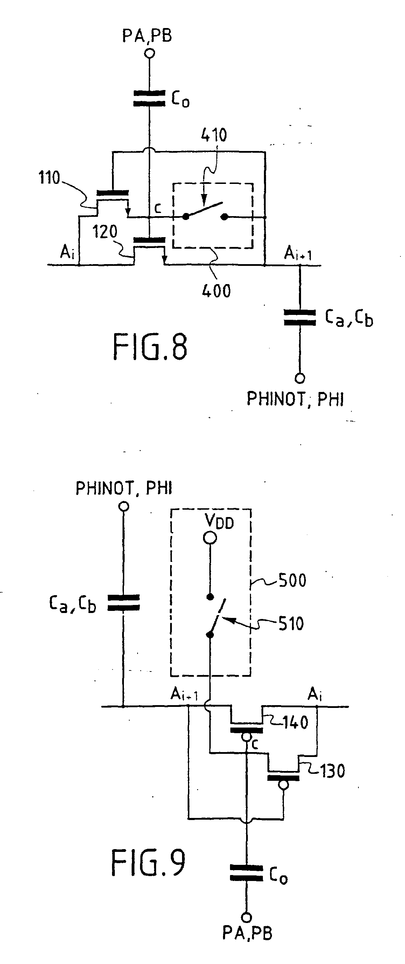

La figure 8 montre un étage d'une pompe de charge équipé de moyens de démarrage 400 conformément à un deuxième mode de réalisation de l'invention. Dans ce deuxième mode de réalisation, le noeud c est relié au noeud Aᵢ₊₁ par un commutateur 410 qui, lorsqu'il est fermé, court-circuite le noeud c avec le noeud Aᵢ₊₁. Le potentiel Vc au noeud c est alors proche du potentiel VAᵢ₊₁ au noeud Aᵢ₊₁, ce qui empêche le potentiel de grille du transistor 120 d'être supérieur au potentiel de source du même transistor. Dans ces conditions, le transistor 120 ne peut pas être dans un état passant et réalise alors la condition nécessaire d'état du transistor 12 au démarrage de la pompe, c'est-à-dire d'être dans un état bloqué. Un tel mode de réalisation donne les mêmes résultats de fiabilité de charge que ceux représentés à la figure 7. Comme pour le premier mode de réalisation, cette pompe de charge peut comprendre un, plusieurs ou tous ses étages équipés du commutateur 410 selon les conditions d'utilisation désirées.

Les premier et deuxième modes de réalisation ont été décrits en relation avec un circuit de commutation 100, 200 qui fonctionne en courant direct (transistors 110 et 120 de type canal N).

La figure 9 représente un étage d'une pompe de charge équipé de moyens de démarrage 500 conformément à un troisième mode de réalisation de l'invention. Ce troisième mode de réalisation correspond à un fonctionnement en courant inverse du circuit de commutation 100, 200 dans la pompe de charge par rapport au fonctionnement correspondant des premier et deuxième modes de réalisation. Dans ce type de fonctionnement, le circuit de commutation 100, 200 de chaque étage comprend un premier et un second transistor 130, 140 à canal inversé (canal P) par rapport aux transistors 110, 120. En conséquence, les conditions requises pour un démarrage sécurisé de la pompe sont aussi inversées. En d'autres termes, le potentiel Vc de la grille du transistor 140 doit être supérieur ou égal au potentiel VAᵢ₊₁ du noeud Aᵢ₊₁ pour placer le transistor dans l'état bloqué. A cet effet, les moyens de démarrage 500 sont formés d'un commutateur 510 disposé entre le noeud c et un potentiel positif V_{DD} dans ce troisième mode de réalisation. Ainsi, par fermeture du commutateur 510, le noeud c est mis à un potentiel qui est supérieur au potentiel VAᵢ₊₁ réalisant la mise en état bloqué du transistor 140 avant un quelconque démarrage de la pompe de charge. Ce troisième mode de réalisation présente les mêmes performances que celles décrites pour les premier et deuxième modes de réalisation selon l'invention.

Le circuit de commutation 100, 200 peut être mis en oeuvre aussi bien avec des transistors à effet de champ à grille isolée (MOS) qu'avec des transistors bipolaires ou des transistors à effet de champ à jonction (FET).

## Revendications

1. Dispositif de pompe de charge comprenant en échelle une pluralité d'étages (1 à N) pour transférer une charge de potentiel d'un étage au suivant en réponse à des signaux d'horloge (PHI, PA, PHINOT, PB), chaque étage comprenant, disposé entre une entrée (A₁) et une sortie (Aᵢ₊₁) un circuit de commutation (100, 200) et une capacité de stockage (Ca; Cb), ledit circuit de commutation étant formé d'un premier transistor (110; 130) et d'un second transistor (120; 140), chaque transistor ayant une grille, un drain et une source, les drains des premier et second transistors étant reliés à l'entrée (Aᵢ) de l'étage, la source du premier transistor (110; 130) étant reliée à la grille du second transistor (120; 140) et la source du second transistor étant reliée à la sortie (Aᵢ₊₁) de l'étage et à la grille du premier transistor, **caractérisé en ce qu'**au moins un des étages (1 à N) comprend, en outre, des moyens de démarrage (300; 400; 500), à un noeud (c) de jonction de ladite source du premier transistor avec ladite grille du second transistor ayant un potentiel (Vc), pour maintenir ledit second transistor (120, 140) dans un état bloqué entre deux cycles d'activation dudit dispositif de pompe de charge.

2. Dispositif de pompe de charge selon la revendication 1, **caractérisé en ce que** chaque étage de ladite pluralité d'étages (1 à N) comprend lesdits moyens de démarrage (300; 400; 500).

3. Dispositif de pompe de charge selon la revendication 1 ou 2, **caractérisé en ce qu'**il fonctionne en courant direct et **en ce que** lesdits moyens de démarrage comportent des moyens pour maintenir ledit potentiel (Vc) dudit noeud (c) à une valeur inférieure ou égale à celle d'un potentiel à la sortie (Aᵢ₊₁) dudit étage.

4. Dispositif de pompe de charge selon la revendication 1 ou 2, **caractérisé en ce qu'**il fonctionne en courant inverse et **en ce que** lesdits moyens de démarrage comportent des moyens pour maintenir ledit potentiel (Vc) dudit noeud (c) à une valeur supérieure ou égale à celle d'un potentiel à la sortie (Aᵢ₊₁) dudit étage.

5. Dispositif de pompe de charge selon la revendication 3, **caractérisé en ce que** les moyens de démarrage (300) comprennent un commutateur (310) disposé entre le noeud de jonction (c) et une borne de mise à la terre (Vₛₛ).

6. Dispositif de pompe de charge selon la revendication 3 ou 5, **caractérisé en ce que** les moyens de démarrage (300) comprennent une résistance (R_{d}) disposée entre le noeud (c) et le potentiel de terre (Vₛₛ).

7. Dispositif de pompe de charge selon la revendication 3 ou 4, **caractérisé en ce que** les moyens de démarrage (400) comprennent un commutateur (410) disposé entre le noeud de jonction (c) et la sortie (Aᵢ₊₁) dudit étage.

8. Dispositif de pompe de charge selon la revendication 4, **caractérisé en ce que** les moyens de démarrage (500) comprennent un commutateur (510) disposé entre le noeud de jonction (c) et une source de potentiel positif (V_{DD}).

9. Dispositif de pompe de charge selon l'une quelconque des revendications 1 à 8, **caractérisé en ce que** lesdits premier et second transistors (110; 120; 130; 140) sont du type transistor bipolaire ou à jonction.

10. Dispositif de pompe de charge selon l'une quelconque des revendications 1 à 8, **caractérisé en ce que** lesdits premier et second transistors (110; 120; 130; 140) sont du type transistor à effet de champ à jonction (FET).

11. Dispositif de pompe de charge selon l'une quelconque des revendications 1 à 8, **caractérisé en ce que** lesdits premier et second transistors (110; 120; 130; 140) sont du type transistor à effet de champ à grille isolée (MOS).

12. Dispositif de pompe de charge selon l'une quelconque des revendications précédentes, **caractérisé en ce que** lesdits signaux d'horloge (PHI, PA, PHINOT, PB) ont une tension de crête inférieure ou sensiblement égale à 3 Volts.

## Claims

1. Charge pump device including, in a cascade arrangement, a plurality of stages (1 to N) for transferring a potential charge from one stage to the next in response to clock signals (PHI, PA, PHINOT, PB), each stage including, arranged between an input (Aᵢ) and an output (Aᵢ₊₁), a switching circuit (100, 200) and a storage capacitor (Ca; Cb), said switching circuit being formed of a first transistor (110; 130) and a second transistor (120; 140), each transistor having a gate, a drain and a source, the drains of the first and second transistors being connected to the input (Aᵢ) of the stage, the source of the first transistor (110; 130) being connected to the gate of the second transistor (120; 140) and the source of the second transistor being connected to output (Aᵢ₊₁) of the stage and to the gate of the first transistor, **characterized in that** at least one of the stages (1 to N) further includes starting-up means (300; 400; 500), at a junction node (c) of said source of the first transistor with said gate of the second transistor having a potential (Vc) for maintaining said second transistor (120, 140) in a non conducting state between two activation cycles of said charge pump device.

2. Charge pump device according to claim 1, **characterized in that** each stage of said plurality of stages (1 to N) includes said starting-up means (300; 400; 500).

3. Charge pump device according to claim 1 or 2, **characterized in that** it operates in forward current and **in that** said starting up means comprise means for maintaining said potential (Vc) of said node (c) at a value less than or equal to that of a potential at the output (Aᵢ₊₁) of said stage.

4. Charge pump device according to claim 1 or 2, **characterized in that** it operates in reverse current and **in that** starting up means comprise means for maintaining said potential (Vc) of said node (c) at a value greater than or equal to that of a potential at the output (Aᵢ₊₁) of said stage.

5. Charge pump device according to claim 3, **characterized in that** the starting-up means (300) include a switch (310) arranged between the junction node (c) and an earth terminal (Vₛₛ).

6. Charge pump device according to claim 3 or 5, **characterized in that** the starting-up means (300) include a resistor (R_{d}) arranged between the junction node (c) and the earth potential (Vₛₛ).

7. Charge pump device according to claim 3 or 4, **characterized in that** the starting-up means (400) include a switch (410) arranged between the junction node (c) and the output (Aᵢ₊₁) of said stage.

8. Charge pump device according to claim 4, **characterized in that** the starting-up means (500) include a switch (510) arranged between the junction node (c) and a positive potential source (V_{DD}).

9. Charge pump device according to any of claims 1 to 8, **characterized in that** said first and second transistors (110; 120; 130; 140) are of the bipolar or junction transistor type.

10. Charge pump device according to any of claims 1 to 8, **characterized in that** said first and second transistors (110; 120; 130; 140) are of the field effect type transistor (FET) type.

11. Charge pump device according to any of claims 1 to 8, **characterized in that** said first and second transistors (110; 120; 130; 140) are of the insulated gate field effect transistor (MOS) type.

12. Charge pump device according to any of the preceding claims, **characterized in that** said clock signals (PHI, PA, PHINOT, PB) have a peak voltage of less than or substantially equal to 3 volts.

## Patentansprüche

1. Ladungspumpenvorrichtung, die in Kaskade eine Mehrzahl von Stufen (1 bis N) enthält, um in Antwort auf Taktsignale (PHI, PA, PHINOT, PB) ein Ladungspotential von einer Stufe zur nächsten zu transferieren, wobei jede Stufe einen zwischen einem Eingang (Aᵢ) und einem Ausgang (Aᵢ₊₁) angeordneten Schaltkreis (100, 200) und eine Speicherkapazität (Ca; Cb) enthält, wobei der Schaltkreis aus einem ersten Transistor (110; 130) und einem zweiten Transistor (120; 140) gebildet ist, wobei jeder Transistor ein Gate, einen Drain und eine Source hat, wobei die Drains des ersten und des zweiten Transistors mit dem Eingang (Aᵢ) der Stufe verbunden sind, die Source des ersten Transistors (110; 130) mit dem Gate des zweiten Transistors (120; 140) und die Source des zweiten Transistors mit dem Ausgang (Aᵢ₊₁) der Stufe und mit dem Gate des ersten Transistors verbunden ist, **dadurch gekennzeichnet, dass** zumindest eine der Stufen (1 bis N) ferner Anlaufmittel (300; 400; 500) an einem Verbindungsknotenpunkt (c) zum Verbinden der Source des ersten Transistors mit dem Gate des zweiten Transistors aufweist, der ein Potential (Vc) hat, um den zweiten Transistor (120, 140) in einem zwischen den beiden Aktivierungszyklen der Ladungspumpenvorrichtung blockierten Zustand zu halten.

2. Ladungspumpenvorrichtung nach Anspruch 1, **dadurch gekennzeichnet, dass** jede Stufe der Mehrzahl von Stufen (1 bis N) die Anlaufmittel (300; 400; 500) aufweist.

3. Ladungspumpenvorrichtung nach Anspruch 1 oder 2, **dadurch gekennzeichnet, dass** sie mit Durchlassstrom betrieben wird und dass die Anlaufmittel Mittel zum Halten des Potentials (Vc) des Knotenpunkts (c) auf einem Wert kleiner oder gleich dem eines Potentials am Ausgang (Aᵢ₊₁) der Stufe aufweisen.

4. Ladungspumpenvorrichtung nach Anspruch 1 oder 2, **dadurch gekennzeichnet, dass** sie mit Sperrstrom betrieben wird und die Anlaufmittel Mittel zum Halten des Potentials (Vc) des Knotenpunkts (c) auf einem Wert größer oder gleich dem eines Potentials am Ausgang (Aᵢ₊₁) der Stufe aufweisen.

5. Ladungspumpenvorrichtung nach Anspruch 3, **dadurch gekennzeichnet, dass** die Anlaufmittel (300) einen Umschalter (310) aufweisen, der zwischen dem Verbindungsknotenpunkt (c) und einer Erdungsklemme (Vₛₛ) angeordnet ist.

6. Ladungspumpenvorrichtung nach Anspruch 3 oder 5, **dadurch gekennzeichnet, dass** die Anlaufmittel (300) einen Widerstand (R_{d}) aufweisen, der zwischen dem Knotenpunkt (c) und dem Erdpotential (Vₛₛ) angeordnet ist.

7. Ladungspumpenvorrichtung nach Anspruch 3 oder 4, **dadurch gekennzeichnet, dass** die Anlaufmittel (400) einen Umschalter (410) aufweisen, der zwischen dem Verbindungsknotenpunkt (c) und dem Ausgang (Aᵢ₊₁) der Stufe angeordnet ist.

8. Ladungspumpenvorrichtung nach Anspruch 4, **dadurch gekennzeichnet, dass** die Anlaufmittel (500) einen Umschalter (510) aufweisen, der zwischen dem Verbindungsknotenpunkt (c) und einer positiven Potential-Quelle (V_{DD}) angeordnet ist.

9. Ladungspumpenvorrichtung nach irgendeinem der Ansprüche 1 bis 8, **dadurch gekennzeichnet, dass** der erste und der zweite Transistor (110; 120; 130; 140) vom Typ bipolarer Transistor oder Flächentransistor sind.

10. Ladungspumpenvorrichtung nach irgendeinem der Ansprüche 1 bis 8, **dadurch gekennzeichnet, dass** der erste und der zweite Transistor (110; 120; 130; 140) vom Typ Feldeffekttransistor mit PN-Übergang (FET) sind.

11. Ladungspumpenvorrichtung nach irgendeinem der Ansprüche 1 bis 8, **dadurch gekennzeichnet, dass** der erste und der zweite Transistor (110; 120; 130; 140) vom Typ Feldeffekttransistor mit isolierter Steuerelektrode (MOS) sind.

12. Ladungspumpenvorrichtung nach irgendeinem der vorangehenden Ansprüche, **dadurch gekennzeichnet, dass** die Taktsignale (PHI, PA, PHINOT, PB) eine Spitzenspannung kleiner oder im wesentlichen gleich 3 Volt haben.
